# EUROPÄISCHE PATENTSCHRIFT

(11) **EP 2 864 825 B1**
(45) Veröffentlichungstag und Bekanntmachung des Hinweises auf die Patenterteilung: **14.09.2016**
(21) Anmeldenummer: 13732411.7
(22) Anmeldetag: 19.06.2013
(51) Int. Cl.: G02B 5/08, G21K 1/06

(54) **MULTILAYER-SPIEGEL FÜR DEN EUV-SPEKTRALBEREICH**
MULTILAYER MIRROR FOR THE EUV SPECTRAL RANGE
MIROIR MULTICOUCHE POUR LA ZONE SPECTRALE ULTRAVIOLET EXTRÊME

(30) Priorität: 20.06.2012 DE 102012105369
(43) Veröffentlichungstag der Anmeldung: 29.04.2015
(73) Patentinhaber: Fraunhofer-Gesellschaft zur Förderung der angewandten Forschung e.V., 80686 München (DE)
(72) Erfinder: YULIN, Sergiy, 07745 Jena (DE); NESTERENKO, Viatcheslav, 07745 Jena (DE); KAISER, Norbert, 07745 Jena (DE)
(74) Vertreter: Epping - Hermann - Fischer
(86) Internationale Anmeldenummer: PCT/EP2013/062787
(87) Internationale Veröffentlichungsnummer: WO 2013/190005

(56) Entgegenhaltungen:
- EP-A1- 1 675 164
- DE-A1- 10 155 711
- DE-A1-102009 054 653
- US-A1- 2002 171 922
- US-A1- 2004 002 009
- US-A1- 2005 277 030
- US-A1- 2006 245 058
- US-A1- 2008 247 044

## Beschreibung

Die Erfindung betrifft einen Multilayer-Spiegel für den EUV-Spektralbereich, der sich durch eine verbesserte Strahlungsbeständigkeit und eine hohe Reflektivität auszeichnet.

Unter dem extremen ultravioletten (EUV) Spektralbereich wird hier und im Folgenden der Wellenlängenbereich von 1 nm bis 100 nm verstanden. Optische Elemente bei derart kurzen Wellenlängen werden durch so genannte Multilayer-Spiegel realisiert. Ein Multilayer-Spiegel enthält eine in der Regel periodische Schichtenfolge aus einer Vielzahl von Schichtpaaren. Jedes der Schichtpaare enthält mindestens zwei Schichten aus verschiedenen Materialien, die in dem zur Verwendung des Bauelements vorgesehenen Wellenlängenbereich einen möglichst großen Unterschied in ihren optischen Konstanten aufweisen sollten. Die Auswahl der Materialien für die Schichtpaare ist daher vor allem von der Wellenlänge, bei der der Multilayer-Spiegel verwendet werden soll, abhängig. Im EUV-Spektralbereich gibt es daher für jeweils einen bestimmten, meist nur wenige Nanometer breiten Wellenlängenbereich eine optimale Materialpaarung, welche aufgrund des optischen Kontrasts der Schichtmaterialien eine hohe Reflektivität garantiert.

Von besonderer praktischer Bedeutung im EUV-Spektralbereich sind Wellenlängen von etwa 13 nm bis 14 nm, da die Wellenlänge von 13,5 nm zur Herstellung von Halbleiterbauelementen mittels EUV-Lithografie vorgesehen ist. Multilayer-Spiegel für Wellenlängen von etwa 13,5 nm weisen in der Regel eine Vielzahl von Schichtpaaren der Materialien Molybdän und Silizium auf. Mit derartigen Multilayer-Spiegeln kann eine hohe Reflektivität von bis zu etwa 70 % erzielt werden.

Beispiele sind in US 2005/277030 offenbart.

Es hat sich aber herausgestellt, dass die Reflektivität von Multilayer-Spiegeln durch EUV-Strahlung mit hoher Intensität erheblich beeinträchtigt wird. Eine Verbesserung der Strahlungsstabilität kann dadurch erzielt werden, dass auf die Vielzahl der Schichtpaare des Multilayer-Spiegels, beispielsweise eine Vielzahl abwechselnder Molybdän- und Siliziumschichten, eine Deckschicht aus einem vergleichsweise strahlungsstabilen Material aufgebracht wird.

Um für hohe Strahlungsintensitäten einen ausreichenden Schutz des Multilayer-Spiegels zu gewährleisten, ist aber eine vergleichsweise dicke Deckschicht erforderlich, die insbesondere die Periodendicke, d.h. die Dicke der Schichtpaare, übersteigen kann. Durch eine vergleichsweise dicke Deckschicht wird aber die Reflektivität des Multilayer-Spiegels erheblich vermindert.

Der Erfindung liegt die Aufgabe zugrunde, einen verbesserten Multilayer-Spiegel für den EUV-Spektralbereich anzugeben, der sich durch eine hohe Strahlungsbeständigkeit und gleichzeitig durch eine hohe Reflektivität auszeichnet.

Diese Aufgabe wird durch einen Multilayer-Spiegel mit den Merkmalen des Patentanspruchs 1 gelöst. Vorteilhafte Ausgestaltungen und Weiterbildungen des Multilayer-Spiegels sind Gegenstand der abhängigen Ansprüche.

Gemäß zumindest einer Ausführungsform umfasst der Multilayer-Spiegel für den EUV-Spektralbereich eine erste periodische Schichtenfolge, die eine Vielzahl von Schichtpaaren aufweist, wobei die Schichtpaare jeweils eine Schicht aus einem ersten Material und eine weitere Schicht aus einem zweiten Material aufweisen.

Das erste Material enthält vorzugsweise ein Material aus der Gruppe Mo, Cr, W, Ru, La, Nb, Co, Re oder ein Verbindung mit einem dieser Materialien. Das zweite Material enthält vorzugsweise ein Material aus der Gruppe Si, C, B, Be, Sc, Mg oder ein Verbindung mit einem dieser Materialien.

Die Begriffe "erstes Material" und "zweites Material" definieren hier und im folgenden nicht, welches der beiden Materialien die untere oder die obere Schicht der Schichtpaare ausbildet. Aufgrund der Vielzahl der Schichtpaare in einem Multilayer-Spiegel ist es in der Regel unerheblich, welches Material als erstes aufgebracht wird. Die periodische Schichtenfolge muss auch nicht notwendigerweise eine gerade Anzahl von Schichten aufweisen. Vielmehr kann im Fall einer ungeraden Anzahl von Schichten auf die obere Schicht des obersten Schichtpaars eine weitere Schicht aus dem Material der unteren Schicht der Schichtpaare aufgebracht sein.

Die erste periodische Schichtenfolge kann beispielsweise eine Vielzahl von Schichtpaaren aufweisen, die jeweils eine

Molybdänschicht und eine Siliziumschicht enthalten. Diese Materialkombination ist insbesondere für Wellenlängen im Bereich um die für die EUV-Lithografie vorgesehene Wellenlänge von 13,5 nm geeignet.

Die Schichtpaare müssen nicht notwendigerweise nur aus der Schicht aus dem ersten Material und der weiteren Schicht aus dem zweiten Material bestehen. Vielmehr kann beispielsweise zwischen den Schichten aus dem ersten Material und dem zweiten Material jeweils eine dünne Barriereschicht aus einem anderen Material vorgesehen sein. Durch das Einfügen derartiger Barriereschichten zwischen die beiden Schichten der Schichtpaare kann Interdiffusion oder die Ausbildung von Verbindungen der Schichtmaterialien an den Grenzflächen zwischen den benachbarten Schichten vermindert und auf diese Weise die thermische Stabilität des Multilayer-Spiegels erhöht werden. Geeignete Barriereschichten, insbesondere für die Materialpaarung Molybdän und Silizium, sind an sich bekannt und werden daher nicht näher erläutert.

Bei dem Multilayer-Spiegel ist auf der ersten periodischen Schichtenfolge eine zweite periodische Schichtenfolge angeordnet, die mindestens zwei Schichtpaare aufweist, wobei die Schichtpaare der zweiten periodischen Schichtenfolge jeweils eine Schicht aus einem dritten Material und eine weitere Schicht aus einem vierten Material aufweisen, wobei zumindest das dritte Material von dem ersten und dem zweiten Material verschieden ist.

Mit anderen Worten weist mindestens eine Schicht der in der zweiten periodischen Schichtenfolge enthaltenen Schichtpaare ein anderes Material auf als die in der ersten periodischen Schichtenfolge enthaltenen Schichten aus dem ersten Material und dem zweiten Material.

Bei dem dritten Material handelt es sich um ein Oxid, ein Nitrid, ein Oxinitrid oder ein Carbid. Durch die Verwendung eines dieser Materialien als das dritte Material in der zweiten periodischen Schichtenfolge kann vorteilhaft eine Erhöhung der Stabilität des Multilayer-Spiegels gegenüber hochenergetischer Strahlung, insbesondere EUV-Strahlung, erzielt werden, wobei die Reflektivität des Multilayer-Spiegels nur wenig vermindert wird.

Das dritte Material ist ein Oxid oder Nitrid von einem Übergangsmetall. Besonders bevorzugt ist das dritte Material TiO₂ oder Nb₂O₅. Es hat sich herausgestellt, dass Oxide oder Nitride von Übergangsmetallen, insbesondere TiO₂ oder Nb₂O₅, besonders strahlungsstabil sind.

Der Multilayer-Spiegel zeichnet sich insbesondere dadurch aus, dass das strahlungsbeständige dritte Material nicht als einzelne Deckschicht auf den Multilayer-Spiegel aufgebracht ist. Vielmehr weist der Multilayer-Spiegel anstelle einer einzigen Deckschicht eine zweite periodische Schichtenfolge auf, die auf die erste periodische Schichtenfolge aufgebracht ist, wobei das strahlungsstabile dritte Material das Schichtmaterial einer der beiden Schichten der Schichtpaare der zweiten periodischen Schichtenfolge ist.

Die Strahlungsbeständigkeit des Multilayer-Spiegels ist insbesondere von der Gesamtdicke der Schichten aus dem dritten Material, d.h. der Summe der Dicken aller Schichten aus dem dritten Material in der zweiten periodischen Schichtenfolge, abhängig.

Bei einer vorteilhaften Ausgestaltung weisen die Schichten aus dem ersten Material jeweils eine Dicke dₐ und die Schichten aus dem zweiten Material eine Dicke d_{b} auf. Eine Summe der Dicken der Schichten aus dem dritten Material ist bevorzugt sowohl größer als dₐ als auch größer als d_{b}. Mit anderen Worten ist die Gesamtdicke aller Schichten aus dem dritten Material größer als die Dicke der einzelnen Schichten aus dem erstem oder zweiten Material in der ersten periodischen Schichtenfolge.

Bevorzugt beträgt die Summe der Dicken der Schichten aus dem dritten Material mehr als eine Periode d₁ der ersten periodischen Schichtenfolge. Insbesondere kann die Summe der Dicken der Schicht aus dem dritten Material mehr als das Doppelte der Periode d₁ der ersten periodischen Schichtenfolge betragen.

Bei einem Multilayer-Spiegel, der für die Wellenlänge 13,5 nm optimiert ist, ist es beispielsweise vorteilhaft, dass die Gesamtdicke der Schichten aus dem dritten Material mindestens 10 nm, mindestens 15 nm oder sogar mindestens 20 nm beträgt.

Würde man eine derart dicke Einzelschicht aus dem dritten Material auf den Multilayer-Spiegel aufbringen, würde dies zu einer signifikanten Verminderung der Reflektivität führen. Bei dem hierin beschriebenen Multilayer-Spiegel wird diese Verminderung der Reflektivität dadurch vermieden, dass das dritte Material auf mehrere einzelne Schichten der Schichtpaare der zweiten periodischen Schichtenfolge verteilt ist, die durch die weitere Schicht der Schichtpaare der zweiten periodischen Schichtenfolge voneinander beabstandet sind.

Die zweite periodische Schichtenfolge bildet auf diese Weise ein reflektierendes Interferenzschichtsystem aus, das zur gesamten Reflektivität des Multilayer-Spiegels beiträgt, sodass eine nur sehr geringfügige Verminderung der Reflektivität des Multilayer-Spiegels auftritt. Eine geringfügige Verminderung der Reflektivität des Multilayer-Spiegels kann beispielsweise dadurch bedingt sein, dass der optische Kontrast zwischen dem dritten Material und dem vierten Material der zweiten periodischen Schichtenfolge geringer ist als der Kontrast zwischen dem ersten Material und dem zweiten Material der ersten periodischen Schichtenfolge.

Die Anzahl der Schichtpaare der zweiten Schichtenfolge beträgt vorzugsweise zwischen einschließlich zwei und einschließlich dreißig. Durch eine Erhöhung der Anzahl der Schichtpaare der zweiten Schichtenfolge, welche das strahlungsstabile dritte Material enthält, erhöht sich die Strahlungsstabilität des Multilayer-Spiegels. Andererseits kann eine Erhöhung der Anzahl der Schichtpaare der zweiten Schichtenfolge zu einer zumindest geringfügigen Verminderung des Reflektivität des Multilayer-Spiegels führen. Die Anzahl der Schichtpaare wird daher je nach Anwendung des Multilayer-Spiegels derart optimiert, dass ein optimaler Kompromiss zwischen hoher Strahlungsbeständigkeit und hoher Reflektivität gefunden wird. Eine besonders bevorzugte Anzahl der Schichtpaare der zweiten Schichtenfolge beträgt zwischen einschließlich vier und einschließlich zehn.

Die Gesamtzahl der Schichtpaare des Multilayer-Spiegels, d. h. die Summe der Anzahl der Schichtpaare der ersten Schichtenfolge und der Anzahl der Schichtpaare der zweiten Schichtenfolge, beträgt vorteilhaft zwischen einschließlich 20 und einschließlich 500. Da der optische Kontrast zwischen geeigneten Schichtmaterialien für Multilayer-Spiegel im Allgemeinen mit abnehmender Wellenlänge geringer wird, sind in der Regel bei kürzeren Wellenlängen mehr Schichtpaare erforderlich als bei größeren Wellenlängen. Bei der für die EUV-Lithografie relevanten Wellenlänge von 13,5 nm beträgt die Anzahl der Schichtpaare vorzugsweise zwischen 30 und 100, beispielsweise etwa 60.

Bei dem Multilayer-Spiegel weisen die erste periodische Schichtenfolge und die zweite periodische Schichtenfolge vorteilhaft im Wesentlichen die gleiche Periode auf. Insbesondere weist die erste periodische Schichtenfolge eine Periode d₁ und die zweite periodische Schichtenfolge eine Periode d₂ auf, wobei 0,95 * d₁ ≤ d₂ ≤ 1,05 * d₁ gilt. Mit anderen Worten unterscheiden sich die Perioden der beiden periodischen Schichtenfolgen um nicht mehr als 5 % voneinander.

Die hohe Reflektivität eines Multilayer-Spiegels für den EUV-Spektralbereich beruht in der Regel darauf, dass sich in dem durch die Vielzahl der Schichtpaare gebildeten Interferenzschichtsystem eine stehende Welle ausbildet, bei der die Maxima der Strahlungsintensität im Bereich des Materials mit der Schichtpaare angeordnet ist, das die geringere Absorption aufweist. Beispielsweise sind im Fall der Materialpaarung Molybdän/Silizium die Schichten mit der geringen Absorption die Siliziumschichten, und die stehende Welle weist Maxima im Bereich der Siliziumschichten auf.

Dadurch, dass die auf die erste periodische Schichtenfolge aufgebrachte zweite periodische Schichtenfolge im Wesentlichen die gleiche Periode wie die erste periodische Schichtenfolge aufweist, trifft dieser Sachverhalt auch für die zweite periodische Schichtenfolge zu. Daher sind auch in der zweiten periodischen Schichtenfolge die Maxima des Strahlungsfeldes vorteilhaft ebenfalls in dem Material mit der geringeren Absorption angeordnet. Vorteilhaft weist das vierte Material bei der Wellenlänge des Reflexionsmaximums des Multilayer-Spiegels eine geringere Absorption als das dritte Material auf. Das dritte Material in der zweiten periodischen Schichtenfolge, welches das strahlungsstabile Material ist, kann daher eine vergleichsweise hohe Absorption aufweisen, ohne dass dadurch die Reflektivität des Multilayer-Spiegels wesentlich beeinträchtigt wird. Bei dem hierin beschriebenen Multilayer-Spiegel tritt daher bei gleicher Gesamtdicke aller Schichten aus dem dritten Material eine geringere Absorption auf, als wenn die entsprechende Gesamtdicke als einzelne Deckschicht auf den Multilayer-Spiegel aufgebracht würde. Auf diese Weise wird vorteilhaft durch die Integration des strahlungsstabilen dritten Materials in eine periodische Schichtenfolge eine vergleichbar gute Strahlungsbeständigkeit wie mit einer vergleichsweise dicken Einzelschicht des strahlungsstabilen Materials erreicht, ohne dass die Reflektivität des Multilayer-Spiegels erheblich beeinträchtigt wird.

Bei einer Ausgestaltung des Multilayer-Spiegels ist das vierte Material gleich dem ersten oder zweiten Material. Beispielsweise kann das erste Material Molybdän, das zweite Material Silizium, das dritte Material eines der zuvor beschrieben strahlungsbeständigen Materialien und das vierte Material Silizium sein. In diesem Fall ist das vierte Material der weiteren Schicht der Schichtpaare der zweiten periodischen Schichtenfolge also gleich dem zweiten Material der ersten periodischen Schichtenfolge. In diesem Fall sind die Maxima des Strahlungsfeldes in der zweiten periodischen Schichtenfolge vorteilhaft innerhalb der nur wenig absorbierenden Siliziumschichten angeordnet. Eine höhere Absorption des strahlungsstabilen dritten Materials wirkt sich daher vorteilhaft nur geringfügig auf die Reflektivität des Multilayer-Spiegels aus.

Bei einer alternativen Ausgestaltung des Multilayer-Spiegels weist die weitere Schicht der Schichtpaare der zweiten periodischen Schichtenfolge ein viertes Material auf, das von dem ersten und dem zweiten Material verschieden ist. Beispielsweise kann für das vierte Material ein Material ausgewählt werden, das wie das dritte Material vergleichsweise strahlungsbeständig ist.

Die Periode der ersten und der zweiten periodischen Schichtenfolge ist abhängig von der Wellenlänge und dem Einfallswinkel der verwendeten Strahlung. Im Allgemeinen ergibt sich die optimale Periode aus der Bragg-Bedingung. Für senkrechten Einfall der Strahlung entspricht die Periode in etwa der halben Wellenlänge der Strahlung. Vorzugsweise weist die erste Schichtenfolge eine Periode d₁ zwischen einschließlich 1 nm und einschließlich 25 nm auf. Weiterhin weist die zweite Schichtenfolge bevorzugt eine Periode d₂ zwischen einschließlich 1 nm und 25 nm auf.

Der Multilayer-Spiegel kann insbesondere Perioden d₁ und d₂ aufweisen, welche für eine Wellenlänge von etwa 13,5 nm optimiert sind, d. h. für die in der EUV-Lithografie relevante Wellenlänge. In diesem Fall weist die erste Schichtenfolge bevorzugt eine Periode d₁ zwischen einschließlich 6,5 nm und 15 nm auf, und auch die zweite Schichtenfolge weist vorzugsweise eine Periode d₂ zwischen einschließlich 6,5 nm und 15 nm auf.

Bei dem Multilayer-Spiegel ist vorzugsweise das erste Material Molybdän und das zweite Material Silizium. Mit dieser Materialpaarung lässt sich insbesondere im Bereich der Wellenlängen um 13,5 nm eine besonders hohe Reflektivität erzielen. Der Multilayer-Spiegel kann insbesondere ein Reflexionsmaximum bei einer Wellenlänge zwischen 13,0 nm und 14,0 nm aufweisen. Der hierin beschriebene Multilayer-Spiegel ist daher insbesondere zur Verwendung als strahlungsbeständiger Spiegel für optische Anordnungen zur Anwendung in der EUV-Lithografie geeignet.

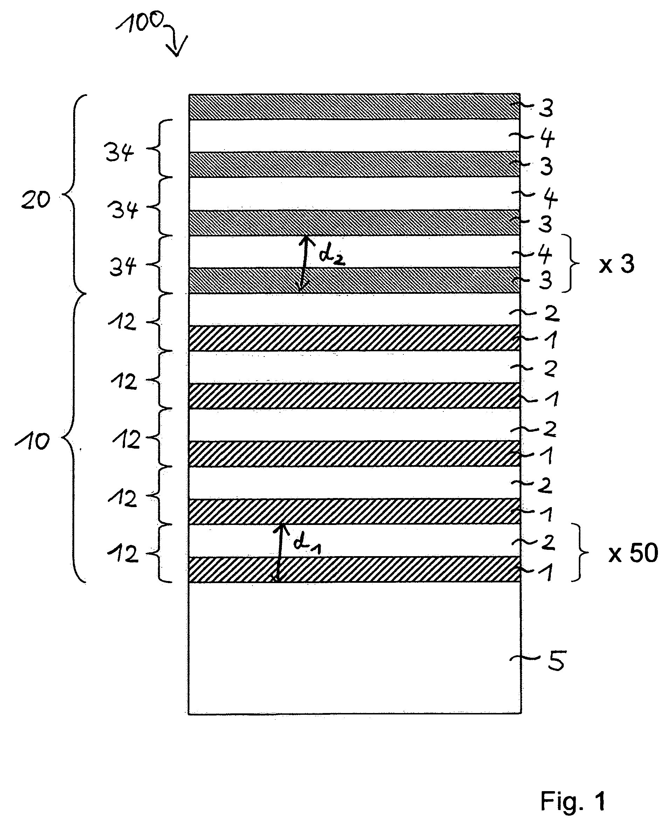

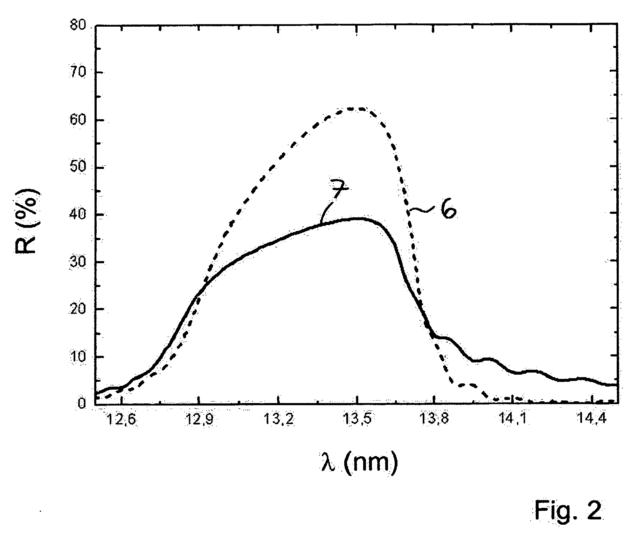

Die Erfindung wird im Folgenden anhand eines Ausführungsbeispiels im Zusammenhang mit den Figuren 1 und 2 näher erläutert.

Es zeigen:
- Figur 1: eine schematische Darstellung eines Querschnitts durch einen Multilayer-Spiegel gemäß einem Ausführungsbeispiel, und
- Figur 2: eine grafische Darstellung der berechneten Reflektivität R des Multilayer-Spiegels gemäß dem Ausführungsbeispiel in Abhängigkeit von der Wellenlänge λ im Vergleich zu einem herkömmlichen Multilayer-Spiegel, der eine einfache Deckschicht aufweist.

Die dargestellten Bestandteile sowie die Größenverhältnisse der Bestandteile untereinander sind nicht als maßstabsgerecht anzusehen.

Der in Figur 1 schematisch im Querschnitt dargestellte Multilayer-Spiegel 100 gemäß einem Ausführungsbeispiel weist eine Vielzahl von Schichten auf, die auf ein Substrat 5 aufgebracht sind. Das Substrat 5 kann beispielsweise Silizium, ein Glas oder eine Glaskeramik aufweisen. Je nach Anwendung des Multilayer-Spiegels 100 kann das Substrat 5 eine ebene oder eine gekrümmte Oberfläche aufweisen.

Der Multilayer-Spiegel 100 umfasst eine erste periodische Schichtenfolge 10 und eine zweite periodische Schichtenfolge 20. Die zweite periodische Schichtenfolge 20 ist auf der ersten periodischen Schichtenfolge 10 angeordnet und ist zur Verbesserung der Strahlungsstabilität des Multilayer-Spiegels 100 vorgesehen.

Die erste periodische Schichtenfolge 10 entspricht im Wesentlichen dem Aufbau eines herkömmlichen Multilayer-Spiegels. Die periodische Schichtenfolge 10 enthält eine Vielzahl von Schichtpaaren 12, wobei die Schichtpaare jeweils eine Schicht 1 aus einem ersten Material und eine weitere Schicht 2 aus einem zweiten Material enthalten. Die Auswahl der Materialien der Schichten 1, 2 der Schichtpaare 12 hängt von der Wellenlänge der Strahlung ab, bei welcher der Multilayer-Spiegel 100 sein Reflexionsmaximum aufweisen soll. Für die Wellenlänge 13,5 nm, welche für Anwendungen in der EUV-Lithografie relevant ist, enthalten die Schichtpaare 12 vorzugsweise Schichten 1 aus Molybdän und Schichten 2 aus Silizium.

Das hierin vorgeschlagene Prinzip ist aber auch für andere Wellenlängen im EUV-Spektralbereich zwischen etwa 1 nm und etwa 100 nm anwendbar, wobei andere Schichtmaterialien eingesetzt werden können. Die Schichtmaterialien 1, 2 der Schichtpaare 12 werden derart gewählt, dass sie bei der Reflexions-Wellenlänge eine möglichst große Brechungsindexdifferenz aufweisen, wobei zumindest eines der Materialien eine möglichst geringe Absorption aufweisen sollte. Geeignete Materialkombinationen für die Schichten 1, 2 für verschiedene Wellenlängen im EUV-Spektralbereich sind an sich bekannt und werden daher nicht näher erläutert.

Die Schichtpaare 12 müssen nicht notwendigerweise aus ausschließlich zwei Schichten 1, 2 bestehen. Es ist beispielsweise möglich, zwischen die Schichten 1 aus dem ersten Material und die Schichten 2 aus dem zweiten Material vergleichsweise dünne Barriereschichten einzufügen, um die thermische Stabilität des Multilayer-Spiegels 100 zu verbessern (nicht dargestellt). Auch derartige Barriereschichten sind an sich bekannt und werden daher nicht näher erläutert.

Auf die erste periodische Schichtenfolge 10 des Multilayer-Spiegels 100 ist vorteilhaft eine zweite periodische Schichtenfolge 20 aufgebracht, welche zur Verbesserung der Strahlungsstabilität des Multilayer-Spiegels 100 dient. Die zweite periodische Schichtenfolge 20 weist Schichtpaare 34 auf, die jeweils eine Schicht 3 aus einem dritten Material und eine weitere Schicht 4 aus einem vierten Material aufweisen. Zumindest das dritte Material ist von dem ersten und dem zweiten Material, aus denen die Schichten 1, 2 der ersten periodischen Schichtenfolge 10 gebildet sind, verschieden.

Eine Verbesserung der Strahlungsstabilität des Multilayer-Spiegels 100 wird vorteilhaft dadurch erzielt, dass das dritte Material ein Oxid, ein Nitrid, ein Oxinitrid oder ein Carbid ist.

Bei dem Multilayer-Spiegel 100 ist das dritte Material im Gegensatz zu herkömmlichen Multilayer-Spiegeln nicht als einzelne Deckschicht auf den Multilayer-Spiegel 100 aufgebracht, sondern bildet das Material der Schichten 3 der Schichtpaare 34 der zweiten periodischen Schichtenfolge 20. Es hat sich herausgestellt, dass für die Verbesserung der Strahlungsstabilität des Multilayer-Spiegels 100 insbesondere die Gesamtdicke aller Schichten 3 aus dem dritten Material in der zweiten periodischen Schichtenfolge 20 relevant ist. Die Gesamtdicke aller Schichten 3 aus dem dritten Material ist bevorzugt größer als die Dicke der einzelnen Schichten 1, 2 aus dem aus dem erstem oder zweiten Material in der ersten periodischen Schichtenfolge. Weiterhin beträgt die Gesamtdicke aller Schichten 3 aus dem dritten Material vorzugsweise mehr als die Periode d₁ der ersten periodischen Schichtenfolge, besonders bevorzugt mindestens 2 * d₁. Die Gesamtdicke aller Schichten 3 kann beispielsweise mindestens 10 nm, mindestens 15 nm oder sogar mindestens 20 nm betragen.

Bei dem Ausführungsbeispiel der Figur 1 weist die zweite periodische Schichtenfolge 20 z. B. fünf Schichtpaare 34 aus den Schichten 3 aus dem dritten Material und den Schichten 4 aus dem vierten Material auf. Als oberste Schicht ist eine zusätzliche Schicht 3 aus dem dritten Material auf den Multilayer-Spiegel 100 aufgebracht. Die Schichten 3 aus dem dritten Material können beispielsweise jeweils eine Dicke von 2,5 nm aufweisen. Bei dem Ausführungsbeispiel beträgt die Gesamtdicke der sechs Schichten 3 aus dem dritten Material daher 15 nm. Wenn man eine 15 nm dicke Deckschicht anders als bei dem hier vorgeschlagenen Prinzip als einzelne Deckschicht auf den Multilayer-Spiegel aufbringen würde, ließe sich zwar eine Verbesserung der Strahlungsstabilität des Multilayer-Spiegels erreichen, was aber eine signifikante Reduzierung der Reflektivität zur Folge hätte.

Bei dem Multilayer-Spiegel 100 gemäß dem Ausführungsbeispiel sind zwischen den Schichten 3 aus dem dritten Material jeweils die Schichten 4 aus dem vierten Material angeordnet, welche mit den Schichten 3 Schichtpaare 34 ausbilden. Die Schichtpaare 34 weisen vorteilhaft im Wesentlichen die gleiche Periode auf wie die Schichtpaare 12 der ersten periodischen Schichtenfolge 10. Vorzugsweise unterscheiden sich die Periode d₁ der ersten periodischen Schichtenfolge 10 und die Periode d₂ der zweiten periodischen Schichtenfolge 20 um nicht mehr als 5 % voneinander. Dies hat den Vorteil, dass die erste periodische Schichtenfolge 10 und die zweite periodische Schichtenfolge 20 gemeinsam ein reflektierendes Interferenzschichtsystem ausbilden, dessen Reflektivität höher ist als bei einem Multilayer-Spiegel mit der gleichen Anzahl von Perioden, der von einer einzelnen beispielsweise 15 nm dicken Deckschicht aus dem dritten Material bedeckt ist.

Die mit der zweiten periodischen Schichtenfolge 20 erzielbare hohe Reflektivität ist insbesondere dadurch zu erklären, dass aufgrund der periodischen Anordnung des strahlungsbeständigen dritten Materials 3 in der zweiten periodischen Schichtenfolge 20 bei Strahlungseinfall eine stehende Welle in dem Multilayer-Spiegel ausgebildet wird, deren Intensitätsmaxima innerhalb derjenigen Schichten des Multilayer-Spiegels 100 liegen, welche die geringere Absorption aufweisen. Das vierte Material der Schichten 4 weist daher vorteilhaft bei der Wellenlänge des Reflexionsmaximums des Multilayer-Spiegels eine geringere Absorption auf als das dritte Material der Schichten 3.

Bei dem dritten Material der Schichten 3 kann es sich insbesondere um ein Oxid oder ein Nitrid eines Übergangsmetalls handeln. Besonders geeignet sind insbesondere TiO₂ oder Nb₂O₅. Die weiteren Schichten 4 der Schichtpaare 34 in der zweiten periodischen Schichtenfolge 20 können eines der Materialien der Schichten 1, 2 der ersten periodischen Schichtenfolge 10 aufweisen, bevorzugt das Material der Schichten 1 und der
Schichten 2, welches die geringere Absorption aufweist.

Bei einer besonders vorteilhaften Ausgestaltung des Multilayer-Spiegels ist das Material der Schichten 1 Molybdän und der Schichten 2 Silizium. In der zweiten periodischen Schichtenfolge 20 ist das Material der Schichten 3 TiO₂ oder Nb₂O₅ und das Material der Schichten 4 wie das zweite Material in der ersten periodischen Schichtenfolge 10 Silizium.

Die Gesamtzahl der Schichtpaare 12, 34 des Multilayer-Spiegels 100 beträgt im Allgemeinen zwischen einschließlich 20 und einschließlich 500. Bei dem Ausführungsbeispiel der Figur 1 beträgt die Gesamtzahl der Schichtpaare N = 59, wobei die erste periodische Schichtenfolge N₁ = 54 Schichtpaare 12 und die zweite periodische Schichtenfolge N₂ = 5 Schichtpaare 34 enthält.

Die Periode d₁ der ersten periodischen Schichtenfolge 10 und die Periode d₂ der zweiten periodischen Schichtenfolge 20 sind von der Wellenlänge der verwendeten Strahlung und dem Einfallswinkel der Strahlung, für den der Multilayer-Spiegel optimiert ist, abhängig. Der Multilayer-Spiegel 100 kann insbesondere für eine maximale Reflektivität bei einer Wellenlänge zwischen 13,0 nm und 14,0 nm optimiert sein. In diesem Fall betragen die Perioden d₁ und d₂ der periodischen Schichtenfolgen 10, 20 in Abhängigkeit vom Einfallswinkel vorzugsweise zwischen 6,5 nm und 15 nm. Bei senkrechtem Einfall beträgt die Periode in etwa die Hälfte der verwendeten Wellenlänge, wobei die Periode mit zunehmendem Einfallswinkel vergrößert werden muss. Bei einem Multilayer-Spiegel, bei dem die Strahlung an verschiedenen Positionen unter verschiedenen Einfallswinkeln auftrifft, kann es daher erforderlich sein, den Multilayer-Spiegel mit einem Schichtdicke-Gradienten zu versehen.

In Figur 2 ist die Reflektivität eines Multilayer-Spiegels gemäß einem Ausführungsbeispiel (Kurve 6) im Vergleich zu einem nicht erfindungsgemäßen Multilayer-Spiegel (Kurve 7) dargestellt. Der Multilayer-Spiegel gemäß dem Ausführungsbeispiel ist wie der in Figur 1 dargestellte Multilayer-Spiegel 100 aufgebaut und weist eine erste periodische Schichtenfolge 10 mit 54 Schichtpaaren 12 auf, die jeweils durch eine Molybdän-Schicht 1 und eine SiliziumSchicht 2 gebildet sind. Darauf ist eine zweite periodische Schichtenfolge 20 angeordnet, die fünf Schichtpaare aus abwechselnden TiO₂-Schichten 3 und Si-Schichten 4 aufweist. Als oberste Schicht weist der Multilayer-Spiegel eine TiO₂-Schicht 3 auf. Die Periode d₁ der ersten periodischen Schichtenfolge 10 beträgt 8,64 nm und die Periode d₂ der zweiten periodischen Schichtenfolge 20 beträgt 8,41 nm. Die TiO₂-Schichten 3 in der zweiten periodischen Schichtenfolge 20 weisen jeweils eine Dicke von 2,5 nm auf. Die insgesamt sechs TiO₂-Schichten 3 weisen daher eine Gesamtdicke von 15 nm auf.

Das Vergleichsbeispiel, dessen Reflektivität die Kurve 7 zeigt, weist 60 Schichtpaare von Molybdän-Schichten und Silizium-Schichten auf, wobei die Periode D₁ = 8,67 nm beträgt. Bei dem nicht erfindungsgemäßen Vergleichsbeispiel ist auf die periodische Schichtenfolge eine 15 nm dicke Deckschicht aus TiO₂ aufgebracht, deren Gesamtdicke somit der Gesamtdicke der TiO₂-Schichten in dem Ausführungsbeispiel entspricht. Der Vergleich der Reflexionskurve 6 des Ausführungsbeispiels und der Reflexionskurve 7 des nicht erfindungsgemäßen Vergleichsbeispiels zeigt, dass die Reflektivität im Maximum bei dem Ausführungsbeispiel um 22,3 % größer ist als bei dem Vergleichsbeispiel. Dies zeigt deutlich, dass die Integration des zur Verbesserung der Strahlungsstabilität dienenden Materials TiO₂ in die periodische zweite Schichtenfolge 20, anstatt dieses Material wie bei dem Vergleichsbeispiel in einer einzigen Deckschicht aufzubringen, eine signifikante Erhöhung der Reflektivität zur Folge hat.

Die Erfindung ist nicht durch die Beschreibung anhand der Ausführungsbeispiele beschränkt.

## Patentansprüche

1. Multilayer-Spiegel (100) für den EUV-Spektralbereich, umfassend
- eine erste periodische Schichtenfolge (10), die eine Vielzahl von Schichtpaaren (12) aufweist, wobei die Schichtpaare (12) jeweils eine Schicht (1) aus einem ersten Material und eine weitere Schicht (2) aus einem zweiten Material aufweisen, und
- eine auf der ersten periodische Schichtenfolge (10) angeordnete zweite periodische Schichtenfolge (20), die mindestens zwei Schichtpaare (34) aufweist, wobei die Schichtpaare (34) der zweiten periodischen Schichtenfolge (20) jeweils eine Schicht (3) aus einem dritten Material und eine weitere Schicht (4) aus einem vierten Material aufweisen,
wobei
- das dritte Material von dem ersten und dem zweiten Material verschieden ist,
- das dritte Material ein Oxid oder Nitrid von einem Übergangsmetall ist, und
- das vierte Material Silizium ist.

2. Multilayer-Spiegel nach Anspruch 1,
wobei das dritte Material TiO₂ oder Nb₂O₅ ist.

3. Multilayer-Spiegel nach einem der vorhergehenden Ansprüche,
wobei die Schichten (1) aus dem ersten Material jeweils eine Dicke dₐ und die Schichten (2) aus dem zweiten Material eine Dicke d_{b} aufweisen, und wobei eine Summe der Dicken der Schichten (3) aus dem dritten Material mehr als dₐ und mehr als d_{b} beträgt.

4. Multilayer-Spiegel nach einem der vorhergehenden Ansprüche,
wobei die erste periodische Schichtenfolge (10) eine Periode d₁ aufweist, und eine Summe der Dicken der Schichten (3) aus dem dritten Material mehr als d₁ beträgt.

5. Multilayer-Spiegel nach einem der vorhergehenden Ansprüche,
wobei die Anzahl der Schichtpaare (34) der zweiten periodischen Schichtenfolge (20) zwischen einschließlich 2 und einschließlich 30 beträgt.

6. Multilayer-Spiegel nach einem der vorhergehenden Ansprüche,
wobei die Anzahl der Schichtpaare (34) der zweiten Schichtenfolge (20) zwischen einschließlich 4 und einschließlich 10 beträgt.

7. Multilayer-Spiegel nach einem der vorhergehenden Ansprüche,
wobei die erste periodische Schichtenfolge (10) eine Periode d₁ und die zweite periodische Schichtenfolge (20) eine Periode d₂ aufweist, wobei 0,95 * d₁ ≤ d₂ ≤ 1,05 * d₁ gilt.

8. Multilayer-Spiegel nach einem der vorhergehenden Ansprüche,
wobei das vierte Material eine geringere Absorption als das dritte Material aufweist.

9. Multilayer-Spiegel nach einem der vorhergehenden Ansprüche,
wobei das vierte Material gleich dem ersten oder zweiten Material ist.

10. Multilayer-Spiegel nach einem der vorhergehenden Ansprüche,
wobei das vierte Material von dem ersten oder zweiten Material verschieden ist.

11. Multilayer-Spiegel nach einem der vorhergehenden Ansprüche,
wobei die erste periodische Schichtenfolge (10) eine Periode d₁ und die zweite periodische Schichtenfolge (20) eine Periode d₂ aufweist, wobei d₁ und d₂ zwischen einschließlich 1 nm und 25 nm betragen.

12. Multilayer-Spiegel nach einem der vorhergehenden Ansprüche,
wobei das erste Material Molybdän und das zweite Material Silizium ist.

13. Multilayer-Spiegel nach einem der vorhergehenden Ansprüche,
wobei der Multilayer-Spiegel ein Reflexionsmaximum bei einer Wellenlänge zwischen 13,0 nm und 14,0 nm aufweist.

## Claims

1. Multilayer mirror (100) for the EUV spectral range, comprising
- a first periodic layer sequence (10) having a multiplicity of layer pairs (12), wherein the layer pairs (12) in each case have a layer (1) composed of a first material and a further layer (2) composed of a second material, and
- a second periodic layer sequence (20) arranged on the first periodic layer sequence (10) and having at least two layer pairs (34), wherein the layer pairs (34) of the second periodic layer sequence (20) in each case have a layer (3) composed of a third material and a further layer (4) composed of a fourth material,
wherein
- the third material is different from the first and second materials,
- the third material is an oxide or nitride of a transition metal, and
- the fourth material is silicon.

2. Multilayer mirror according to Claim 1,
wherein the third material is TiO₂ or Nb₂O₅.

3. Multilayer mirror according to either of the preceding claims,
wherein the layers (1) composed of the first material in each case have a thickness dₐ and the layers (2) composed of the second material a thickness d_{b}, and wherein a sum of the thicknesses of the layers (3) composed of the third material is more than dₐ and more than d_{b}.

4. Multilayer mirror according to any of the preceding claims,
wherein the first periodic layer sequence (10) has a period d₁ and a sum of the thicknesses of the layers (3) composed of the third material is more than d₁.

5. Multilayer mirror according to any of the preceding claims,
wherein the number of layer pairs (34) of the second periodic layer sequence (20) is between 2 and 30 inclusive.

6. Multilayer mirror according to any of the preceding claims,
wherein the number of layer pairs (34) of the second layer sequence (20) is between 4 and 10 inclusive.

7. Multilayer mirror according to any of the preceding claims,
wherein the first periodic layer sequence (10) has a period d₁ and the second periodic layer sequence (20) has a period d₂, wherein 0.95 * d₁ ≤ d₂ ≤ 1.05 * d₁ holds true.

8. Multilayer mirror according to any of the preceding claims,
wherein the fourth material has a lower absorption than the third material.

9. Multilayer mirror according to any of the preceding claims,
wherein the fourth material is identical to the first or second material.

10. Multilayer mirror according to any of the preceding claims,
wherein the fourth material is different from the first or second material.

11. Multilayer mirror according to any of the preceding claims,
wherein the first periodic layer sequence (10) has a period d₁ and the second periodic layer sequence (20) has a period d₂, wherein d₁ and d₂ are between 1 nm and 25 nm inclusive.

12. Multilayer mirror according to any of the preceding claims,
wherein the first material is molybdenum and the second material is silicon.

13. Multilayer mirror according to any of the preceding claims,
wherein the multilayer mirror has a reflection maximum at a wavelength of between 13.0 nm and 14.0 nm.

## Revendications

1. Miroir multicouche (100) destiné au domaine spectral EUV, comprenant :
- une première succession de couches (10) périodique qui présente une pluralité de paires de couches (12), dans lequel lesdites paires de couches (12) présentent respectivement une couche (1) d'un premier matériau et une autre couche (2) d'un deuxième matériau, et
- une deuxième succession de couches (20) périodique disposée sur la première succession de couches (10) périodique, qui présente au moins deux paires de couches (34), dans lequel lesdites paires de couches (34) de la deuxième succession de couches (20) périodique présentent respectivement une couche (3) d'un troisième matériau et une autre couche (4) d'un quatrième matériau,
dans lequel
- le troisième matériau est différent des premier et deuxième matériaux,
- le troisième matériau est un oxyde ou un nitrure d'un métal de transition, et
- le quatrième matériau est le silicium.

2. Miroir multicouche selon la revendication 1,
dans lequel le troisième matériau est le TiO₂ ou le Nib₂O₅.

3. Miroir multicouche selon l'une quelconque des revendications précédentes,
dans lequel les couches (1) du premier matériau présentent respectivement une épaisseur dₐ et les couches (2) du deuxième matériau présentent une épaisseur d_{b}, et dans lequel une somme des épaisseurs des couches (3) du troisième matériau est supérieure à dₐ et supérieure à d_{b}.

4. Miroir multicouche selon l'une quelconque des revendications précédentes,
dans lequel la première succession de couches (10) périodique présente une période d₁, et une somme des épaisseurs des couches (3) du troisième matériau est supérieure à d₁.

5. Miroir multicouche selon l'une quelconque des revendications précédentes,
dans lequel le nombre des paires de couches (34) de la deuxième succession de couches (20) périodique est compris entre 2 inclus et 30 inclus.

6. Miroir multicouche selon l'une quelconque des revendications précédentes,
dans lequel le nombre des paires de couches (34) de la deuxième succession de couches (20) périodique est compris entre 4 inclus et 10 inclus.

7. Miroir multicouche selon l'une quelconque des revendications précédentes,
dans lequel la première succession de couches (10) périodique présente une période d₁ et la deuxième succession de couches (20) périodique présente une période d₂, où 0,95 * d₁ ≤ d₂ ≤ 1,05 * d₁.

8. Miroir multicouche selon l'une quelconque des revendications précédentes,
dans lequel le quatrième matériau présente une plus faible absorption que le troisième matériau.

9. Miroir multicouche selon l'une quelconque des revendications précédentes,
dans lequel le quatrième matériau est identique au premier ou au deuxième matériau.

10. Miroir multicouche selon l'une quelconque des revendications précédentes,
dans lequel le quatrième matériau est différent du premier ou du deuxième matériau.

11. Miroir multicouche selon l'une quelconque des revendications précédentes,
dans lequel la première succession de couches (10) périodique présente une période d₁ et la deuxième succession de couches (20) périodique présente une période d₂, où d₁ et d₂ sont compris entre 1 nm et 25 nm inclus.

12. Miroir multicouche selon l'une quelconque des revendications précédentes,
dans lequel le premier matériau est le molybdène et le deuxième matériau est le silicium.

13. Miroir multicouche selon l'une quelconque des revendications précédentes,
dans lequel le miroir multicouche présente un maximum de réflexion à une longueur d'onde comprise entre 13,0 nm et 14,0 nm.
